# EUROPÄISCHE PATENTANMELDUNG

(11) **EP 0 851 185 A2**
(43) Veröffentlichungstag der Anmeldung: **01.07.1998**
(21) Anmeldenummer: 97121335.0
(22) Anmeldetag: 04.12.1997
(51) Int. Cl.: F25B 15/10

(54) **Kühlaggregat**

(30) Priorität: 23.12.1996 DE 19654261
(71) Anmelder: ELECTROLUX SIEGEN GmbH, 57074 Siegen (DE)
(72) Erfinder: Andersson, Sven-Erik, 61931 Trosa (SE); Sagulin, Robert, 13248 Saltsjö Boo (SE); Schaper, Frank G., 57074 Siegen (DE)
(74) Vertreter: Grosse, Wolfgang, Dipl.-Ing.

(57) **Zusammenfassung**

Bei einem Kühlaggregat für einen Absorptionskreislauf, sind ein Absorber (1), ein Kocher (19), ein Kondensator (2) und ein Verdampfer (22) vorgesehen, wobei der Absorber (1) aus wenigstens zwei miteinander verbundenen profilierten Platten gebildet ist, die Leitungen und Anschlüsse (10, 11, 12, 15, 16) zur Verbindung mit dein Kocher (19) und dem Verdampfer (22) bilden, wobei die Leitungen mäanderförmig geführt sind und zwei benachbarte Leitungen über mindestens eine Öffnung miteinander verbunden sind. Der Absorber (1) läßt sich durch eine zumindest teilweise Neigung der Leitungen zur Horizontalen aus einer neutralen Position um eine senkrecht zur Plattenebene verlaufende Achse um mehr als 3°, vorzugsweise um mehr als 6°, verschwenken, ohne daß durch die Drehung der Platten der Betrieb des Kühlaggregats behindert ist. Dies ermöglicht den Einsatz des Kühlaggregats auch auf mobilen Fahrzeugen und Booten, bei denen häufig eine Neigung auftritt.

## Beschreibung

Die Erfindung betrifft ein Kühlaggregat nach dem Oberbegriff des Anspruchs 1. Solche Kühlaggregate werden insbesondere für Kühlschränke eingesetzt, die geräuschlos betrieben werden sollen und für die eine Wärmequelle als Antrieb eingesetzt werden soll.

Aus der US 37 82 134 ist ein Absorptionskühlsystem bekannt, bei dem fast alle Komponenten in zwei aufeinandergelegten Platten gebildet sind, in denen Leitungen für den Absorber, den Kocher, den Kondensator und den Verdampfer vorgesehen sind. Dies führt zu einer einfachen Herstellbarkeit des Absorptionskühlsystems, hat jedoch den Nachteil, daß der Wirkungsgrad des Kühlkreislaufs vermindert wird. Insbesondere auf der warmen Seite des Kreislaufs treten Verluste auf, da in den Platten eine Wärmeleitung zwischen den einzelnen Bauteilen stattfindet, der Kocher nicht als effizienter Doppelrohrkocher ausgebildet ist und zwischen dem Kocher und dem Absorber nur ein Wärmetauscher mit einem minderen Wirkungsgrad vorgesehen ist. Das starr zusammengehaltene Absorptionskühlsystem muß ferner für den Betrieb in einer bestimmten Position gehalten werden, um ein Anstauen von Flüssigkeit in einer der Leitungen zu vermeiden. Ein Einsatz dieser Anlage in einem Fahrzeug, das auch auf schrägem Gelände abgestellt wird, oder in einem Boot, bei dem ebenfalls Neigungen auftreten können, ist daher ungeeignet.

Zusätzlich ist es aus der EP 0 624 762 bekannt, ein Kühlaggregat mit einem Absorptionskreislauf zu betreiben, bei dem der Absorber aus zwei parallel angeordneten Platten gebildet ist, in denen Leitungen geformt sind. Bei dem Absorptionskreislauf wird an der Unterseite des Absorbers reiche Lösung zunächst einem Wärmetauscher und anschließend einem Kocher zugeleitet. Von dem als Doppelrohr ausgebildeten Kocher wird NH₃-Dampf ausgetrieben und einem Kondensator zugeführt. Das Kondensat wird anschließend in einem Verdampfer verdampft, wobei der Umgebung zu Kühlzwecken Wärme entzogen wird. Das dampfförmige Medium wird anschließend dem, Absorber zugeleitet, wo es durch die vom, Kocher zugeleitete Flüssigkeit wieder absorbiert wird. Die beschriebene Anlage besitzt zwar einen relativ guten energetischen Wirkungsgrad für den Normalbetrieb, sobald jedoch das Kühlaggregat geneigt wird, besteht die Gefahr, daß die im Absorber enthaltene Flüssigkeit sich sammelt und in den horizontal angeordneten Leitungen die Flüssigkeit derart gestaut wird, daß sich ein Siphon ausbildet. Ein solches Anstauen von Flüssigkeit behindert den Betrieb des Kühlaggregats und senkt folglich den Wirkungsgrad der Anlage erheblich. Ferner ist die in der EP 06 24 762 gezeigte Anlage konstruktiv aufwendig, da der Absorber, der Kocher, der Kondensator und der Verdampfer jeweils separat ausgebildet sind und daher in einer aufwendigen Montage zusammengesetzt werden müssen.

Es ist daher die Aufgabe der vorliegenden Erfindung, ein Kühlaggregat zu schaffen, das auch betrieben werden kann, wenn das Kühlaggregat sich in einer leicht geneigten Stellung befindet, ohne daß dabei der Wirkungsgrad erheblich absinkt. Ferner soll das Kühlaggregat konstruktiv einfach aufgebaut sein und einen möglichst hohen Wirkungsgrad aufweisen.

Diese Aufgabe wird mit einem Kühlaggregat mit den Merkmalen des Anspruchs 1 gelöst. Durch die Ausbildung des Absorbers, des Absorberbehälters und des Kondensators jeweils ans wenigstens zwei miteinander verbundenen profilierten Platten lassen sich diese beiden Komponenten schnell und einfach herstellen, wobei durch die teilweise Neigung der Leitungen ein Verschwenken um mehr als 3°, vorzugsweise um mehr als 6°, um eine senkrecht zur Plattenebene verlaufende Achse zuläßt, ohne daß ein Anstauen von Flüssigkeit im Absorber oder dem Kondensator den Betrieb des Kühlaggregats behindert. Die Neigungsunempfindlichkeit des Kühlaggregats hat den Vorteil, daß es auch für mobile Zwecke wie in Fahrzeugen oder Booten eingesetzt werden kann. Ferner kann das Kühlaggregat mit einem hohen Wirkungsgrad betrieben werden, wenn ein separater Kocher mit einem vorgeschalteten Wärmetauscher mit dein Kondensator und dem Absorber verbunden wird. Durch die plattenförmige Ausbildung des Absorbers, des Absorberbehälters und des Kondensators kann deren Bautiefe gering gehalten werden.

In einer vorteilhaften Ausgestaltung der Erfindung wird die Neigungsunempfindlichkeit des Absorbers dadurch erreicht, daß die Leitungen v-förmige Abschnitte aufweisen, wobei die Oberfläche des Absorbers durch eine meanderförmige Ausbildung der Leitungen besonders groß wird. Wenn die Leitungen des Absorbers den jeweils tiefsten Stellen dabei eine Öffnung zur benachbarten Leitung aufweisen, tritt solange kein Flüssigkeitsstau auf, solange die Neigung des Absorbers nicht über die Neigung des v-förmigen Schenkels von der Horizontalen abweicht. Aber selbst dann wird durch die Öffnungen in den Leitungen die Behinderung durch den Flüssigkeitsstau reduziert.

Entsprechend einer bevorzugten Ausführungsform sind die Wände der Leitungen des Absorbers mit Rillen versehen, so daß an den Wänden Kapillareffekte auftreten, die für eine besonders gute Verteilung der Flüssigkeit an den Wänden des Absorbers verantwortlich sind, was eine gute Wärmeübertragung und damit einen hohen Wirkungsgrad bedingt. Vorzugsweise sind die Rillen in an sich bekannter Weise in unterschiedliche Richtungen mit einem Neigungswinkel angeordnet.

Vorzugsweise sind der Absorber, der Absorberbehälter und der Kondensator integral miteinander aus zwei Platten gebildet, so daß das Kühlaggregat auf besonders einfache Weise und kompakt hergestellt werden kann. Dabei treten auch keine zusätzlichen Wärmeverluste durch Wärmeleitung auf, da der Absorber und der Kondensator auf ungefähr dem selben Temperaturniveau gehalten werden.

In einer vorteilhaften Ausgestaltung der Erfindung ist der Kondensator als Rohrschlangenkondensator mit Flüssigkeitsabscheider ausgebildet, so daß das in dein Kondensator entstehende Kondensat den Wärmeübergang auf den Dampf nicht behindert. Für eine möglichst große, für den Wärmeübergang zugängliche Oberfläche weist der Kondensator einen ersten meanderförmig geführten Kanal auf, dessen Windungen im wesentlichen vertikal ausgebildet sind, und einen unterhalb des ersten Kanals liegenden zweiten Kanal, wobei zur Flüssigkeitsabscheidung zwischen dem ersten und dem zweiten Kanal eine Vielzahl von Verbindungen vorgesehen ist. Die in dem zweiten Kanal angesammelte Flüssigkeit behindert auch bei einer Neigung des Kondensators dabei nicht die Wärmeübertragung im ersten Kanal. Vorzugsweise ist an dem einen Ende des ersten Kanals ein Anschluß für ein gasförmiges Medium vorgesehen, wobei sich die vertikale Erstreckung der Windung des ersten Kanals zum anderen Ende hin vergrößert, wobei der zweite Kanal von dem mit dem Anschluß versehenen Ende zur Horizontalen schräg nach unten verlaufend ausgebildet ist. Dadurch kann das in dem zweiten Kanal angesammelte Kondensat nach unten ablaufen.

Eine besonders kompakte Bauweise des Kühlaggregats läßt sich erhalten, wenn zwischen dem Kondensator und dem, Absorber ein Verdampfer vorgesehen ist, dessen Leitungen im wesentlichen senkrecht zur Plattenebene des Absorbers verlaufen. Dabei sind die Leitungen des Verdampfers meist in einem Kühlraum geführt, der zu den wärmeren Teilen des Kühlaggregats isoliert ist. Um die internen Verluste des Kühlaggregats möglichst gering zu halten, ist zwischen dem Absorber und dem Kondensator ein Kocher vorgesehen, wobei der Kocher und der Verdampfer auf zwei gegenüberliegenden Seiten des Absorbers angeordnet sind.

Das Kühlaggregat läßt sich auf besonders einfache Weise herstellen, wenn die beiden Platten des Absorbers und des Kondensators miteinander verschweißt werden.

Die Erfindung wird nachfolgend anhand eines Ausführungsbeispiels mit Bezug auf die beigefügten Zeichnungen näher erläutert. Es zeigen:
- Fig. 1: eine Schnittansicht durch den Absorber und den Kondensator des Kühlaggregats;
- Fig. 2: eine vergrößerte Teilansicht der Leitung des Absorbers der Fig. 1;
- Fig. 3: einen Schnitt entlang der Linie A-A der Fig. 2;
- Fig. 4: eine schematische Schnittansicht durch das Kühlaggregat;
- Fig. 5: eine Seitenansicht des Kühlaggregats der Fig. 4 in Verbindung mit einem Kühlraum, und
- Fig. 6: eine Draufsicht auf das Kühlaggregat der Fig. 4 und 5.

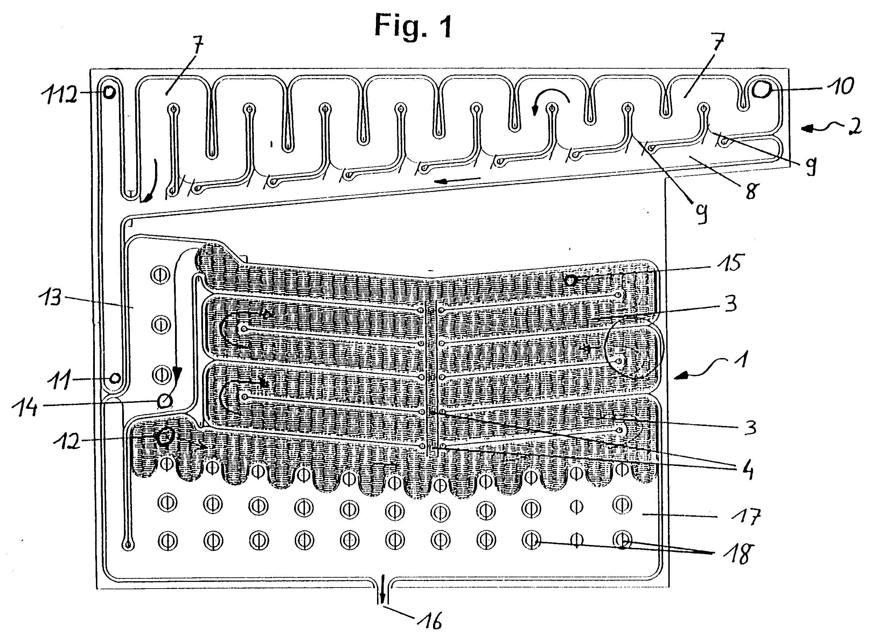

Das in den Fig. 1 bis 3 gezeigte Kühlaggregat besitzt einen Absorber 1 und einen Kondensator 2. Der Absorber 1 und der Kondensator 2 sind dabei aus zwei aufeinander gelegten Platten gebildet, die miteinander laserverschweißt sind. Es ist auch möglich, den Kondensator und den Absorber getrennt voneinander durch jeweils zwei aufeinander gelegte Platten auszubilden.

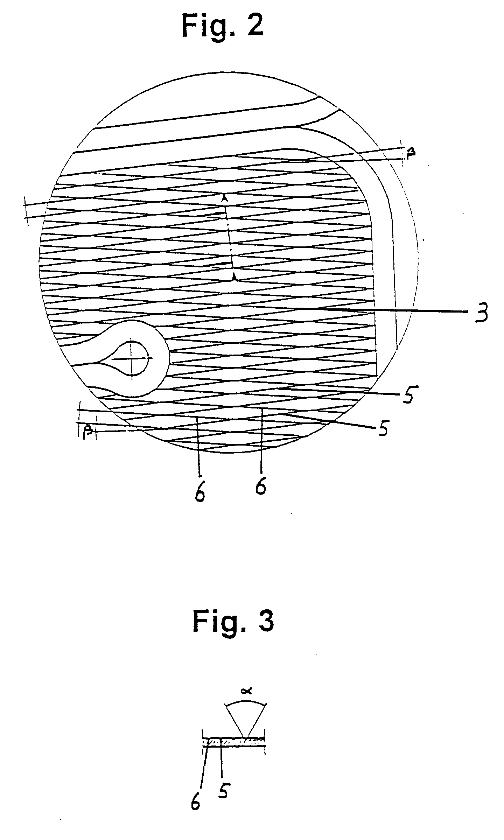

Der Absorber 1 weist v-förmige Leitungen 3 auf, die jeweils meanderförmig übereinanderliegend geführt sind. An der tiefsten Stelle jeder v-förmigen Leitung 3 ist eine Öffnung 4 vorgesehen, die zur benachbarten Leitung 3 führt. Die Wände der Leitungen 3 sind mit Rillen 5 und 6 versehen, um die Kapillareffekte an den Wänden zu vergrößern. Die Rillen sind dabei keilartig mit einem Winkel α von 60° ausgebildet und weisen eine Tiefe von 0,3 mm auf. Der Abstand von zwei parallel verlaufenden Rillen beträgt ungefähr 1,5 mm. Die Wände sind mit Rillen versehen, die in zwei unterschiedliche Richtungen verlaufen. In der Fig. 2 verlaufen die Rillen 5 um einen Winkel β von 5° schräg nach oben, während die Rillen 6 um den Winkel β = 5° von der Horizontalen schräg nach unten verlaufen.

Oberhalb des Absorbers 1 ist ein Kondensator 2 angeordnet, der einen meanderförmig verlaufenden ersten Kanal 7 und einen darunterliegenden zweiten Kanal 8 aufweist. Zwischen dem ersten Kanal 7 und dem zweiten Kanal 8 sind Verbindungen 9 vorgesehen, die als Flüssigkeitsabscheider dienen. An dem einen Ende des ersten Kanals 7 ist ein Anschluß 10 für ein gasförmiges Medium vorgesehen, das durch die meanderförmigen Windungen geführt wird. Die Länge der Windungen nimmt dabei über den Kondensator 2 hin zu. Dementsprechend ist der zweite Kanal 8 zur Horizontalen schräg nach unten verlaufend ausgebildet, so daß ausgeschiedene Flüssigkeit durch die Schwerkraft nach unten abgeführt wird. Am anderen Ende des Kondensators 2 ist ein Flüssigkeitssammler vorgesehen, an dessen unterem Ende ein Anschluß 11 zu einem Verdampfer vorgesehen ist und an dessen oberem Bereich ein Anschluß 112 für ein Druckausgleichsrohr angeordnet ist.

Der im Verdampfer erzeugte Dampf wird über einen Anschluß 12 in den Absorber 1 geleitet. Der Dampf durchströmt dabei die meanderförmigen Leitungen 3 und wird von der im Absorber 1 enthaltenen Flüssigkeit absorbiert. Am Ende der Leitungen 3 des Absorbers 1 ist ein Vorkühler 13 für das vom Kältemittel gereinigte Hilfsgas vorgesehen, in dessen unterem Bereich ein Anschluß 14, der zum Verdampfer führt, angeordnet ist. Der Anschluß 112 kommuniziert durch das Druckausgleichsrohr mit dem Anschluß 12.

Der Absorber 1 weist in seinem unteren Bereich einen Vorratsbehälter 17 auf, in dem Abstandshalter 18 zur Beabstandung der beiden Platten voneinander vorgesehen sind. An der Unterseite des Vorratsbehälters 17 ist ein Abfluß 16 für die reiche Lösung vorgesehen. Im oberen Bereich des Absorbers 1 ist ein Anschluß 15 für zuzuführende arme Lösung angeordnet.

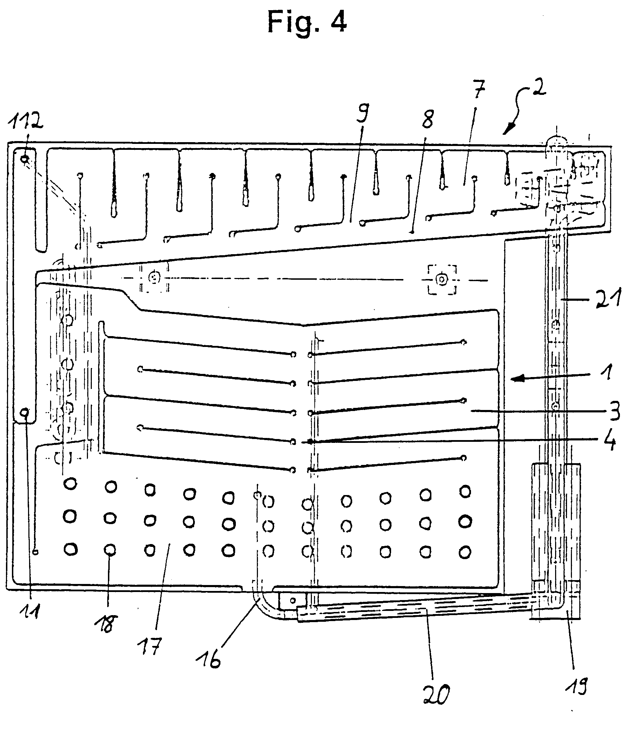

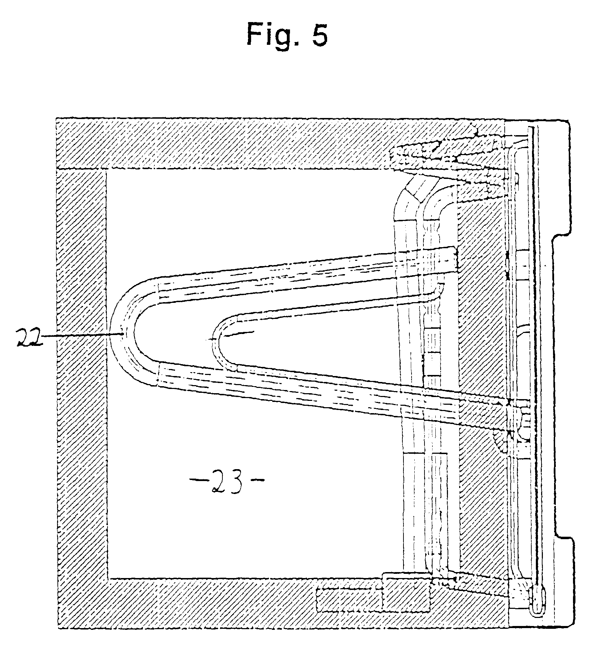

In den Fig. 4 bis 6 ist das Kühlaggregat in zusammengebautem Zustand gezeigt, wobei das Kühlaggregat zur Kühlung eines Raumes verwendet wird. Der Abfluß 16 von dem Vorratsbehälter 17 des Absorbers 1 führt zu einem Doppelrohrwärmetauscher 20, bei dem der reichen Lösung Wärme zugeführt wird. Die so erwärmte reiche Lösung wird zu einem Kocher 19 geleitet, in dem das Kältemittel ausgetrieben wird und über eine Leitung 21 dem Kondensator 2 über den Anschluß 10 zugeführt wird. Die im Kocher 19 erzeugte arme Lösung wird über den Doppelrohrwärmetauscher 20 dem Absorber 1 in einem oberen Bereich über den Anschluß 15 zugeleitet.

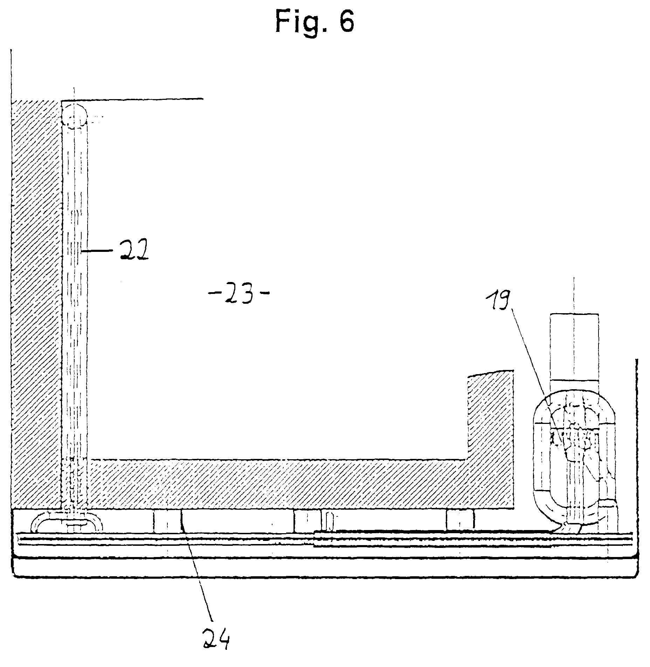

Der im Kondensator 2 kondensierte Dampf wird über den Anschluß 11 dem Verdampfer 22 zugeführt. Der Verdampfer 22 ist dabei senkrecht zur Plattenebene des Absorbers 1 und des Kondensators 2 ausgebildet und tritt durch eine Rückwand in einen Kühlraum 23 ein. Der Verdampfer 22 kühlt somit den Kühlraum 23, wobei der erzeugte Dampf über den Anschluß 12 dem Absorber 1 zugeleitet wird. Wie in Fig. 6 gezeigt ist, ist die plattenförmige Einheit aus Absorber 1 und Kondensator 2 über Verbindungselemente 24 an der Rückwand des Kühlraums befestigt. In dem beschriebenen Ausführungsbeispiel wird das Kühlaggregat mit einer wässrigen Ammoniaklösung betrieben, wobei als Hilfsgas Wasserstoff eingesetzt wird.

## Patentansprüche

1. Kühlaggregat für einen Absorptionskreislauf, im wesentlichen umfassend einen Absorber (1), einen Kocher (19), einen Kondensator (2) und einen Verdampfer (22), wobei der Absorber (1) aus wenigstens zwei miteinander verbundenen profilierten Platten gebildet ist, die Leitungen und Anschlüsse (10, 11, 12, 15, 16) zur Verbindung mit einem Kocher (19) und einem Verdampfer (22) bilden, wobei die Leitungen mäanderförmig geführt sind und zwei benachbarte Leitungen über mindestens eine Öffnung miteinander verbunden sind, **dadurch gekennzeichnet, daß** die Leitungen zumindest teilweise eine Neigung gegenüber der Horizontalen aufweisen, so daß der Absorber (1) aus einer neutralen Position um eine senkrecht zur Plattenebene verlaufende Achse um mehr als 3° verschwenkbar ist, ohne daß durch die Drehung der Platten der Betrieb des Kühlaggregats behindert ist.

2. Kühlaggregat nach Anspruch 1, **dadurch gekennzeichnet, daß** die Leitungen (3) des Absorbers (1) zumindest einen v-förmigen Abschnitt aufweisen, wobei die einzelnen Leitungen (3) übereinanderliegend angeordnet sind.

3. Kühlaggregat nach Anspruch 1 oder 2, **dadurch gekennzeichnet, daß** jeweils an der tiefsten Stelle eines v-förmigen Abschnitts in der Leitung (3) des Absorbers (1) eine Öffnung (4) zur benachbarten Leitung (3) vorgesehen ist.

4. Kühlaggregat nach einem der vorhergehenden Ansprüche, **dadurch gekennzeichnet, daß** die Wände der Leitungen (3) des Absorbers (1) mit Rillen (5, 6) versehen sind.

5. Kühlaggregat nach Anspruch 4, **dadurch gekennzeichnet, daß** Rillen (5, 6) vorgesehen sind, die in zwei unterschiedliche Richtungen verlaufen und sich die in unterschiedliche Richtungen verlaufenden Rillen (5, 6) jeweils kreuzen.

6. Kühlaggregat nach einem der vorhergehenden Ansprüche, **dadurch gekennzeichnet, daß** integral mit dem Absorber in dessen unterem Bereich ein Vorratsbehälter (17) gebildet ist.

7. Kühlaggregat nach einem der vorhergehenden Ansprüche, **dadurch gekennzeichnet, daß** der Absorber (1) und der Kondensator (2) integral miteinander aus mindestens zwei Platten gebildet sind.

8. Kühlaggregat nach einem der vorhergehenden Ansprüche, **dadurch gekennzeichnet, daß** der Kondensator (2) als Rohrschlangenkondensator mit Flüssigkeitsabscheider (9) ausgebildet ist.

9. Kühlaggregat nach Anspruch 8, **dadurch gekennzeichnet, daß** der Kondensator (2) einen ersten meanderförmig geführten Kanal (7) aufweist, dessen Windungen im wesentlichen vertikal ausgebildet sind und einen unterhalb des ersten Kanals (7) liegenden zweiten Kanal (8) aufweist, wobei zwischen dem ersten und dein zweiten Kanal eine Vielzahl von Verbindungen (9) vorgesehen sind.

10. Kühlaggregat nach Anspruch 8 oder 9, **dadurch gekennzeichnet, daß** an dem einen Ende des erstes Kanals ein Anschluß (10) für ein gasförmiges Medium vorgesehen ist und sich die vertikale Erstreckung der Windungen des ersten Kanals (8) zum anderen Ende hin vergrößert.

11. Kühlaggregat nach einem der Ansprüche 8 bis 10, **dadurch gekennzeichnet, daß** der zweite Kanal (8) von dem Ende, an dem der erste Kanal (7) einen Anschluß (10) für ein gasförmiges Medium aufweist, zur Horizontalen schräg nach unten verlaufend ausgebildet ist.

12. Kühlaggregat nach einem der vorhergehenden Ansprüche, **dadurch gekennzeichnet, daß** zwischen dem Kondensator (2) und dem Absorber (1) ein Verdampfer (22) vorgesehen ist, dessen Leitungen im wesentlichen senkrecht zur Plattenebene des Absorbers (1) angeschlossen sind.

13. Kühlaggregat nach einem der vorhergehenden Ansprüche, **dadurch gekennzeichnet, daß** zwischen dem Absorber (1) und dem, Kondensator (2) ein Kocher (19) vorgesehen ist und der Kocher (19) und der Verdampfer (22) auf zwei gegenüberliegenden Seiten des Absorbers (1) vorgesehen sind.

14. Kühlaggregat nach einem der vorhergehenden Ansprüche, **dadurch gekennzeichnet, daß** die beiden Platten des Absorbers (1) und des Kondensators (2) miteinander verschweißt sind.
